# EUROPEAN PATENT APPLICATION

(11) **EP 1 597 986 A1**
(43) Date of publication of application: **23.11.2005**
(21) Application number: 04011842.4
(22) Date of filing: 19.05.2004
(51) Int. Cl.: A47F 1/12, B62B 3/00, A47F 5/12, A47B 57/58

(54) **Goods dispensing carriage**

(71) Applicant: Enjoy Sales AB, 840 60 Bräcke (SE)
(72) Inventor: Sjölander, Hakan, 840 12 Fränsta (SE); Andersen, John, 1605 Fredriksstad (NO)
(74) Representative: Skagersten, Thomas

(57) **Abstract**

The present invention relates to a shop fittings carriage having a framework, a plurality of spaced gravity feed shelf devices supported above each other by the framework, and a plurality of wheels attached to the framework at a bottom thereof. At least one shelf device is accessible from the rear side of the carriage as well as from the front side thereof. At least one shelf device comprises a plate shaped shelf, a plurality of partitions each having a front end and a rear end, and a front end product stopper. The shelf is forwardly inclined, is provided with a low friction surface coating on an upper side thereof, and comprises a front recess portion wherein said front ends are detachably received at arbitrary positions, and a rear recess portion wherein said rear ends are detachably received at arbitrary positions. The front end product stopper is arranged at a front end of the shelf.

The present invention also relates to a gravity shelf device, having substantially all the above mentioned features related to the shelf device.

## Description

### Field of the invention

The present invention relates to the field of shop fittings, and more particularly to a shop fittings carriage having a plurality of gravity feed shelf devices, and to such a shelf device.

### Background of the invention

Gravity feed shelf devices, comprising shelves and product partitions mounted thereon, are commonly used for shop fittings due to there capability of self feeding of products loaded onto the shelves. Thus, the products are always positioned as close to the front of the shelf as possible. Further, they promote a natural behaviour of loading the shelves from the rear, such that the freshest products are always placed last in the queue of products. In order to additionally facilitate this behaviour, carriages supporting a plurality of such gravity feed shelf devices above each other have been developed. An example thereof is disclosed in US 5,871,108, wherein a shop fittings carriage comprises a framework, and a plurality of spaced shelves supported above each other by the framework. Wheels are attached to the framework at a bottom thereof, to provide the movability. The shelves are accessible from the rear of the carriage. Embodiments where the shelves are inclined downwardly from rear to front for achieving gravity-feeding of the products towards the front of the shelves, are disclosed.

However, this prior art carriage is incomplete as regards the product feed function. In practise, the products do not slide very well on any shelf at a reasonably small inclination, and there is no teaching in US 5,871,108 of how to easily separate and load differently sized products.

### Summary of the invention

It is an object of the present invention to solve the problem of product feeding on a shop fittings carriage.

This object is achieved by the invention as defined in claims 1, 5 and 10 respectively, of the enclosed set of claims.

Thus, in one aspect thereof, the invention provides for a shop fittings carriage comprising a framework, a plurality of spaced gravity feed shelf devices supported above each other by the framework, and a plurality of wheels attached to the framework at a bottom thereof. At least one shelf device is accessible from the rear side of the carriage as well as from the front side thereof. At least one shelf device comprises a plate shaped shelf, a plurality of elongated partitions, each having a front end and a rear end, and a front end product stopper. The plate shaped shelf is forwardly inclined, and is provided with a low friction surface coating on un upper side thereof. Further, the shelf comprises a front recess portion wherein said front ends are detachably received at arbitrary positions, and a rear recess portion wherein said rear ends are detachably received at arbitrary positions. The front end product stopper is arranged at the front end of the shelf.

The movable shop fittings carriage enables a person to fill the shelves thereof by moving the carriage into a position where the shelves are reachable from the very rear of the carriage. The new products are loaded by the person directly onto the shelves from the rear thereof. Due to the low friction surface coating and the partitions the loading is facilitated. This is because the low friction coating ensures that the products slide forward on the shelf at a relatively small inclination, and because the partitions are arbitrarily placeable along the shelf. Thus, it is easy to adapt the width between the partitions to differently sized products.

In another aspect thereof, the invention provides a gravity shelf device comprising a plate shaped shelf, a plurality of product partitions, each having a front end and a rear end, and a front end product stopper. The plate shaped shelf is arranged to be forwardly inclined, is provided with a low friction surface coating on un upper side thereof, and comprises a front recess portion wherein said front ends of the partitions are detachably receivable at arbitrary positions, and a rear recess portion wherein said rear ends of the partitions are detachably receivable at arbitrary positions, and wherein the shelf is arranged to detachably receive said front end product stopper at a front end of the shelf.

What is stated above regarding the gravity shelf device arranged in the carriage also applies to the gravity shelf device itself.

Further, it is to be noted that the front end stopper, which stops the products from falling off the shelf, is arranged at the front end of the shelf, i.e. it can be attached to the very front edge of the shelf or to the upper surface of the shelf anywhere close to the front edge. For example, the stopper can be attached either in front of or behind the front recess portion. Further, the stopper can be in one piece or in several separate pieces.

The recess portions can comprise any kind of recesses that are capable of receiving the ends of the partitions. According to an embodiment of the invention, at least one of the front recess portion and the rear recess portion comprises a plurality of consecutive borings extending in parallel to the front end of the shelf. In other words a row of borings is arranged. It is easy to move the partitions between different borings, while the different positions are locked so as to facilitate alignment of the partitions.

According to an embodiment at least said front recess portion is provided with said plurality of consecutive borings, said borings being arranged for receiving both said partitions and said stopper. In this embodiment the borings are used, at the front end of the shelf, for attachment of both the partitions and the stopper. Thus, it is appreciated that the form of the ends of the partitions and the form of the stopper are matched, for example in such way that the stopper, except for attachment portions thereof extending into borings, is spaced from the upper surface of the shelf so as to permit the ends of the partitions to reach borings through the space.

According to an embodiment the coating is a polytetrafluorethylene painting. This painting has exceptionally low friction and is resistant to abrasion, which makes it particularly useful for the purposes of this invention.

According to an embodiment, the partitions are wire partitions, whereby they are of low cost and low weight.

These and other aspects of the invention will be apparent from and elucidated with reference to the embodiments described hereinafter.

### Brief description of the drawings

Exemplifying embodiments of the invention will be described below with reference to the accompanying drawings, in which:
Fig. 1 schematically shows an embodiment of a shop fittings carriage according to the present invention;
Fig. 2 schematically shows an embodiment of a shelf device according to the present invention;
Fig. 3 schematically shows another embodiment of a shelf device according to the present invention;
Fig. 4 schematically shows another embodiment of a shelf device according to the present invention; and
Fig. 5 schematically shows a system of carriages.

### Description of embodiments

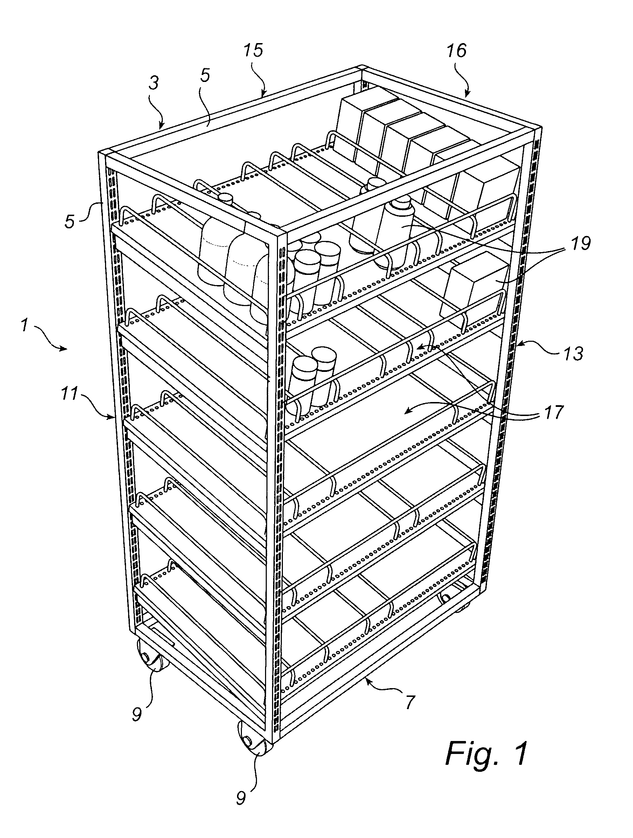

As shown in Fig. 1 an embodiment of the shop fittings carriage 1 comprises a framework 3 constituted by elongated bars 5, forming a bottom frame 7, on which a plurality of wheels 9 are mounted, shelf device supporting upstanding side frames 11, 13, and a shelf device supporting upstanding rear frame 15. All frames 7, 11, 13 and 15, are interconnected to form a stabile framework 3 for the carriage 1, being able to support a plurality of shelf devices 17 and a heavy load of products 19 supported by the shelf devices 17. The shelf devices 17 are attached to the rear frame 15 as well as to the side frames 11, 13, and are arranged above each other and are vertically spaced apart so as to give room for the products 19. The rear frame has an open structure so as to admit product loading from the rear of the carriage 1.

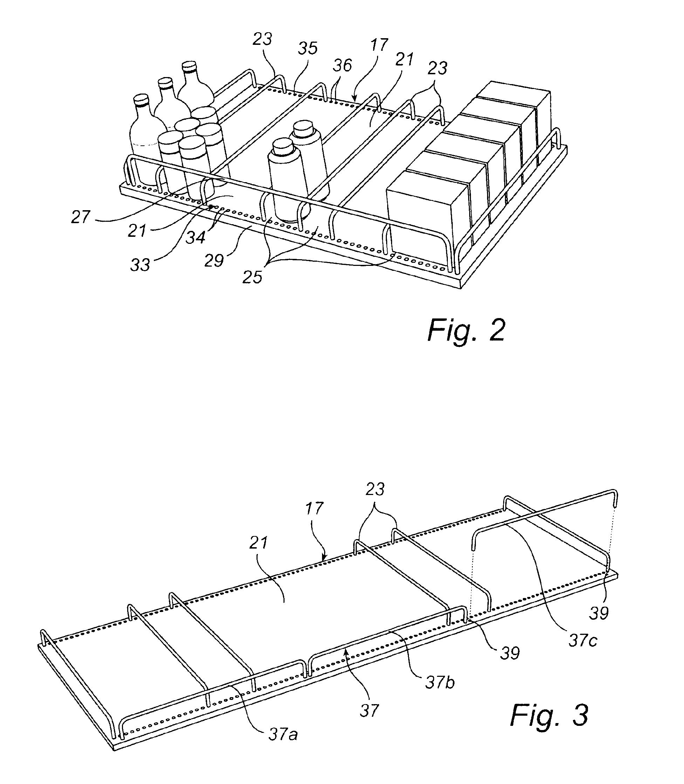

Each shelf device, as more closely shown in Fig. 2, comprises a plate shaped shelf 21, and a plurality of wire partitions 23, which are mounted on the shelf 21 at top surface 21a thereof. The shelf 21 is forwardly inclined, i.e. it slopes downwards from the rear towards the front of the shelf 21. The wire partitions 23 divide the top surface 21a lengthwise, i.e. as seen from one side frame 11 to the other 13, in a plurality of lanes 25, thereby separating rows of the products 19 from each other. The width of each lane 25 is individually adapted to the width of the product, i.e. the outer package thereof, that is to be placed in that lane 25 and guided by the two lane defining partitions 23 to the front of the shelf 21.

Further, the shelf device comprises a front end product stopper 27, mounted at a front end 29 of the shelf 21, and at the top surface 21a thereof. The stopper 27 extends along the front end 29 of the shelf 21, and is formed by wire. The stopper 27 stops the products from falling off the shelf.

The shelf is provided with a front recess portion 33, constituted by a plurality of consecutive borings extending in parallel with the front end 29 of the shelf 21, and a similar rear recess portion 35, constituted by a plurality of consecutive borings extending in parallel with the front end 29 of the shelf 21. Each wire partition has a front end that is received in a boring of said front recess portion 33, and a rear end that is received in a boring of said rear recess portion 35. In this way it is easy to relocate the partitions 23 by simply removing them from one pair of borings 33, 35 and fitting them into another pair of borings 33, 35. Thus, an operation of adapting the lanes 25 to products having a different size (width) than previously supported products is fast.

The front and rear ends of the wire stopper 27 are received in two of the front borings 33. The wire partitions 23 and the wire stopper 27 are similarly formed, having elongated front and rear end portions extending substantially perpendicular to the top surface 21a, and an intermediate bar portion interconnecting the end portions and extending in parallel with the top surface 21a. Since the wire partitions 23 and the wire stopper 27 shares the front recess borings 33, the wire stopper 27 is made higher than the wire partitions 23. Thus, the wire partitions 23 are mountable beneath the wire stopper 27, in the space between the bar portion of the wire stopper 27 and the top surface 21a.

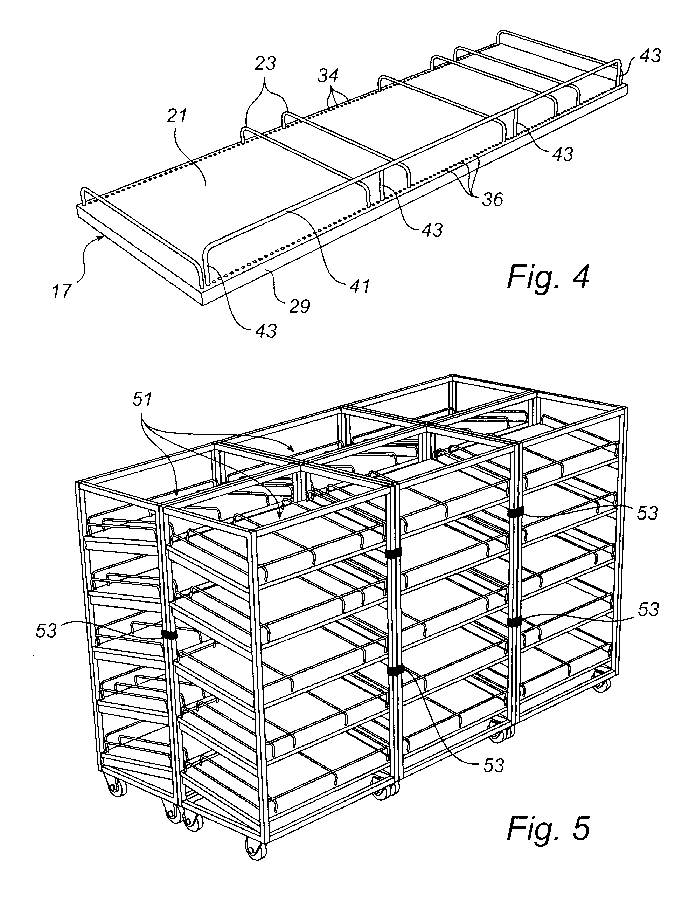

In an alternative embodiment of the shelf device, as shown in Fig. 3, the stopper 37 is provided in multiple pieces 37a-c, arranged consecutively and close to each other along the front end of the shelf. In this embodiment there are separate borings 39 for the stopper pieces, which separate borings 39 are provided in front of the front recess borings 33 for the partitions 23. By providing the separate borings, the attachment ends of the stopper pieces 37a-c do not delimit the arbitrary positioning of the partitions, as would have been the case with shared borings. Further, by matching the distances between borings, it is possible to use the same elements as both partitions 23 and stopper pieces 37a-c. This embodiment is also useful for very long shelves, where a single piece stopper could be too flexible. On the other hand, by providing a single piece stopper having three or more attachment portions, see Fig. 4, this last-mentioned problem is overcome.

In yet an alternative embodiment (not shown) the partitions are plate shaped, which in some respects facilitates the handling thereof, while the wire type is preferred, among other things for reasons of manufacture.

The top surface 21a of each shelf 21 is provided with a low-friction coating consisting of a polytetrafluorethylene (such as TEFLON® ) painting. This gives the shelf optimum sliding properties. Thereby it is possible to keep the inclination of the shelf 21 relatively small. This, in turn, minimises the risk of a product, such as a thin and tall bottle, falling because it is leaning too much.

In Fig. 5 it is shown that the shop fittings carriages 41 are usable for building long shelving sections on a free floor space. Then the carriages 41 are preferably positioned back-to-back and interconnected by clamping means 43. When it is time to load products on one or more shelves on one or more carriages 41, the clamping means 43 are easily removed, and the carriages are easily moved in order for a person to access the rear thereof.

Additionally, it is possible to bring a carriage that needs to be filled into the stock, and fill the carriage there before returning it to the shop interior.

Alternatively, it is possible to fill a replacement carriage in the stock, bring it into the shop and replace a carriage that needs to be refilled, which can in turn be brought back to the stock.

In a special use of the carriage, it is provided as an interior fitting of a refrigerator. Then, the refrigerator doors do not have to stay open long times when products are loaded onto the shelves. Instead the carriage is rolled out of the refrigerator to be filled with new products.

## Claims

1. A shop fittings carriage comprising a framework, a plurality of spaced gravity feed shelf devices supported above each other by the framework, and a plurality of wheels attached to the framework at a bottom thereof, wherein at least one shelf device is accessible from the rear side of the carriage as well as from the front side thereof, and wherein at least one shelf device comprises a plate shaped shelf, a plurality of partitions each having a front end and a rear end, and a front end product stopper, wherein said plate shaped shelf is forwardly inclined, is provided with a low friction surface coating on un upper side thereof, and comprises a front recess portion wherein said front ends are detachably received at arbitrary positions, and a rear recess portion wherein said rear ends are detachably received at arbitrary positions, and wherein said front end product stopper is arranged at a front end of the shelf.

2. A shop fittings carriage according to claim 1, wherein at least one of said recess portions comprises a plurality of consecutive borings extending in parallel to the front end of the shelf.

3. A shop fittings carriage according to claim 1 or 2, wherein said coating is a polytetrafluorethylene painting.

4. A shop fittings carriage according to any one of claims 1-3, wherein said partitions are wire partitions.

5. A gravity feed shelf device comprising a plate shaped shelf, which is provided with a low friction surface coating on un upper side thereof; a plurality of product partitions, each having a front end and a rear end, and a front end product stopper, wherein said plate shaped shelf is arranged to be forwardly inclined, is provided with a low friction surface coating on un upper side thereof, and comprises a front recess portion wherein said front ends of the partitions are detachably receivable at arbitrary positions, and a rear recess portion wherein said rear ends of the partitions are detachably receivable at arbitrary positions, and wherein the shelf is arranged to detachably receive said front end product stopper at a front end of the shelf.

6. A gravity feed shelf device according to claim 5, wherein at least one of said recess portions comprises a plurality of consecutive borings extending in parallel to the front end of the shelf.

7. A gravity feed shelf device according to claim 6, wherein at least said front recess portion is provided with said plurality of consecutive borings, said borings being arranged for receiving both said partitions and said stopper.

8. A gravity feed shelf device according to any one of claims 5-7, wherein said coating is a polytetrafluorethylene painting.

9. A gravity feed shelf device according to any one of claims 5-8, wherein said partitions are wire partitions.

10. A refrigerator comprising a shop fittings carriage according to any one of claims 1-4.
